**Europäisches Patentamt**

**European Patent Office**

**Office européen des brevets**

(19)

(11) Numéro de publication : **0 085 010**

**B1**

(12)

# FASCICULE DE BREVET EUROPÉEN

(45) Date de publication du fascicule du brevet :
**19.07.89**

(51) Int. Cl.⁴ : **F 16 L 29/00**

(21) Numéro de dépôt : **83400157.0**

(22) Date de dépôt : **21.01.83**

(54) Coupleur auto-obturateur, notamment pour fluide ou réfrigérant.

(30) Priorité : **27.01.82 FR 8201273**

(43) Date de publication de la demande :
**03.08.83 Bulletin 83/31**

(45) Mention de la délivrance du brevet :
**19.07.89 Bulletin 89/29**

(84) Etats contractants désignés :
**DE GB IT**

(56) Documents cités :
**DE—C— 966 465**
**GB—A— 784 860**
**GB—A— 1 218 941**
**US—A— 3 994 317**

(73) Titulaire : **Gromelle, Raymond**
**4, rue du Révérend Père Favre**
**F-74708 Ville-la-Grand (FR)**

(72) Inventeur : **Gromelle, Raymond**
**4, rue du Révérend Père Favre**
**F-74708 Ville-la-Grand (FR)**

(74) Mandataire : **Kügele, Bernhard et al**
**c/o NOVAPAT-CABINET CHEREAU 5, Place du Molard**
**CH-1204 Genève (CH)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 085 010 B1

## Description

La présente invention concerne un coupleur auto-obturateur comprenant un élément mâle insérable dans un élément femelle, des moyens de verrouillage à bague des éléments en position accouplée, chaque élément comprenant un moyen de clapet avec un élément déplaçable entre une position de fermeture de veine de fluide en butée sous l'action d'un ressort contre un organe stationnaire dudit moyen de clapet, et une position d'ouverture de veine à l'encontre de la sollicitation du ressort, les moyens de clapet des deux éléments coopérant mutuellement pour s'ouvrir lors de l'accouplement des éléments, le moyen de clapet de l'un des deux éléments mâle et femelle comprenant un organe stationnaire central terminé par un plateau frontal, le moyen de clapet de l'autre élément comprenant un clapet coulissant disposé centralement et pourvu d'un capuchon d'extrémité coopérant périphériquement avec une partie tronconique interne du corps dudit élément.

Le brevet américain 3 994 317 décrit un coupleur auto-obturateur ayant une partie mâle et une partie femelle, les deux parties comportant chacune un clapet de fermeture. Les deux clapets restent dans leur position fermée tant que les deux parties mâle et femelle sont séparées, et lors de l'accouplement de ces deux parties, leur mouvement axial relatif produit l'ouverture des deux clapets une fois que l'étanchéité entre les deux parties mâle et femelle a été établie.

Le brevet britannique 784 860 divulgue un coupleur auto-obturateur de la même sorte que le brevet américain décrit ci-dessus dont la tige d'un des clapets comporte une forme particulière de façon telle qu'un petit espace d'air est formé entre les faces frontales des deux tiges des clapets butant l'une contre l'autre lors de l'accouplement des deux parties mâle et femelle.

Le raccordement des coupleurs sous charge de fluide sous pression pose, indépendamment des problèmes classiques d'étanchéité, des problèmes de limitation et de contrôle des quantités d'air susceptibles d'être emprisonnées entre le moyen de clapet coopérant avec les éléments mâle et femelle lors de la séquence d'accouplement. Ce problème est particulièrement aïgu en ce que concerne les fluides réfrigérants, plus particulièrement des fluorures dits « fréon » utilisés dans les installations de refroidisssement ou de climatisation, qui, pour un bon fonctionnement de l'installation, doivent être totalement exempts, dans la mesure du possible, d'air dissous.

La présente invention a précisément pour objet de proposer un coupleur auto-obturateur convenant tout particulièrement pour ce type d'utilisation, de fonctionnement fiable et efficace et ne laissant qu'une zone unique d'air non contrôlée réduite à une valeur infime, pratiquement négligeable.

Pour ce faire, selon une caractéristique de la présente invention, le capuchon du coupleur auto-obturateur comprend un joint torique, joint qui comporte une surface conique et une surface frontale annulaire destinées à s'appuyer contre la face avant d'un plateau frontal dudit organe stationnaire, la surface annulaire du joint torique étant en saillie devant la surface plate d'un plateau de clapet coulissant.

Selon une autre caractéristique plus particulière de l'invention, le moyen de clapet de l'élément mâle comprend, monté sur la périphérie d'un plateau d'extrémité de clapet formant le capuchon, un joint comportant une face annulaire frontale écartée vers l'avant de la face avant du plateau d'extrémité et une face tronconique périphérique adjacente coopérant normalement, au repos, avec ladite partie tronconique interne du corps de l'élément mâle.

Avec cet agencement, lors de la venue en contact du capuchon d'extrémité du clapet coulissant central de l'élément mâle avec le plateau frontal stationnaire de l'élément femelle, le joint annulaire monté sur la périphérie du plateau d'extrémité de capuchon de l'élément mâle enferme, entre la face frontale de ce plateau d'extrémité et la face externe adjacente du plateau frontal du moyen de clapet stationnaire de l'élément femelle, une petite épaisseur d'air prisonnier, qui ne peut absolument pas, par la suite, passer dans le fluide remplissant les veines de passage de fluide du coupleur, la seule zone d'air non contrôlée susceptible d'être emprisonnée dans le coupleur correspondant au jeu annulaire existant entre la périphérie du plateau frontal stationnaire du moyen de clapet de l'élément femelle et l'alésage interne de la partie d'extrémité avant du corps de l'élément mâle au travers de laquelle est inséré le plateau frontal stationnaire de l'élément femelle lors de l'accouplement des deux éléments.

D'autres caractéristiques et avantages de la présente invention ressortiront de la description suivante d'un mode de réalisation, donné à titre illustratif mais nullement limitatif faite en relation avec les dessins annexés, sur lesquels :

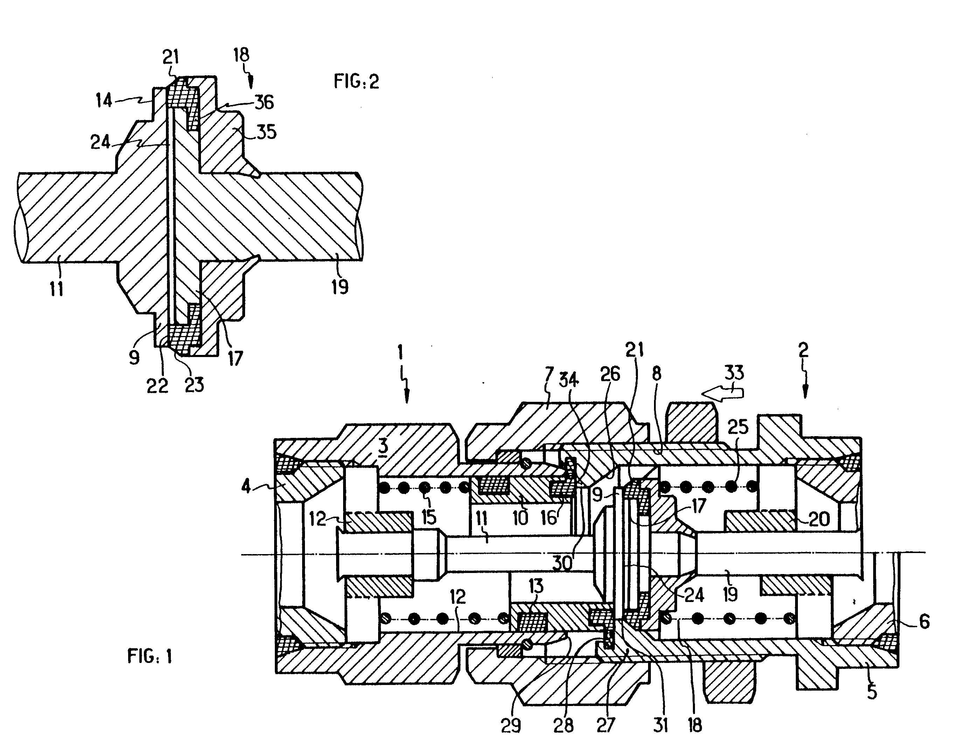

La figure 1 représente en coupe longitudinale un coupleur auto-obturateur selon la présente invention et, plus précisément, en demi-vue inférieure, le coupleur en phase d'accouplement, et, en demi-vue supérieure, le coupleur totalement accouplé avec ouverture complète de la veine de passage du fluide interne ; et la figure 2 est une vue en coupe longitudinale à plus grande échelle de la jonction d'accouplement entre le capuchon de clapet coulissant de l'élément mâle et le plateau frontal stationnaire du moyen de clapet de l'élément femelle.

Comme on le voit sur la figure 1, le coupleur selon l'invention comprend essentiellement un élément femelle 1 et un élément mâle 2. De façon plus spécifique, l'élément femelle comprend un corps femelle 3, susceptible d'être couplé par un adaptateur 4 à un élément de circuit du fluide sous pression, par exemple de circuit de réfrigérant, l'élément mâle 2 comprenant un corps mâle 5, susceptible d'être couplé par l'intermédiaire d'un adaptateur 6 à un autre élément du circuit de fluide sous pression. L'élément femelle 1 comporte également une douille de verrouillage externe 7 comprenant un taraudage coopérant avec un filetage externe 8 du corps mâle 5. Dans l'élément femelle 1 est disposé un moyen de clapet comprenant un plateau stationnaire central 9 formant siège et un piston annulaire coulissant 10 formant clapet. Le plateau frontal 9 est porté par une tige centrale 11 sertie à son extrémité dans des ailettes radiales 12. Le piston 10 coulisse dans un alésage 12 du corps femelle 3 avec interposition d'un joint périphérique 13. Le piston 10 est sollicité vers l'extérieur contre la face arrière 14 du plateau 9 par un ressort 15 portant contre les ailettes 12. Le piston 10 comporte également, à son extrémité avant, un joint annulaire 16 dont la partie intérieure de la face avant porte contre la face arrière 14 du plateau 9 pour assurer l'étanchéité lorsque les éléments sont désaccouplés.

L'élément mâle 2 comporte similairement un moyen de clapet interne constitué d'un plateau d'extrémité 17 formant un capuchon de clapet 18 à l'extrémité d'une tige 19, cet ensemble étant toutefois monté coulissant dans des ailettes 20, comme on le voit sur la droite de la figure 1, contrairement au système stationnaire central de l'élément femelle 1.

Comme on le voit mieux sur la figure 2, le capuchon 18 comprend, rapporté sur le plateau d'extrémité 17 de la tige 19, un joint périphérique 21 en matériau élastique, par exemple en élastomère, définissant une face annulaire avant 22 prolongée radialement vers l'extérieur par une face périphérique tronconique 23. La face annulaire avant 22 est écartée vers l'avant de la face externe du plateau d'extrémité 17 de façon que, dans la configuration de contact d'accouplement représentée sur la figure 2, il existe, entre les faces externes en regard du plateau d'extrémité 17 du moyen de clapet coulissant de l'élément mâle et du plateau frontal 9 stationnaire du moyen de clapet de l'élément femelle, une chambre fermée 24 de faible épaisseur renfermant une quantité d'air prisonnier résultant de la phase d'accouplement des deux éléments, cet air prisonnier ne pouvant en aucun cas s'échapper dans les conduites intérieures définies par les éléments indépendamment, dans une large mesure, des problèmes d'alignement des moyens de clapet des deux éléments du coupleur ou des problèmes de qualité d'usinage des plateaux d'extrémité, au contraire de ce qui se passerait par exemple si l'un des plateaux était simplement équipé par surmoulage d'un voile de matériau élastomère.

Le capuchon de clapet 18 est normalement sollicité vers l'extérieur par un ressort 25 prenant appui sur les ailettes 20 et tendant donc, au repos, c'est-à-dire en position désaccouplée, à faire porter la face tronconique périphérique 23 du joint 21 contre une partie tronconique interne 26 de la partie d'extrémité avant 27, du corps mâle 5. Cette dernière comporte, au voisinage de son extrémité avant, un joint annulaire 28 venant porter, en configuration de plein accouplement du coupleur, avec la face frontale annulaire 29 de l'extrémité avant amincie du corps femelle 3. Entre le joint 28 et la partie tronconique interne 26 l'extrémité avant 27 du corps mâle 5 définit un alésage de diamètre réduit 30 de diamètre très légèrement supérieur au diamètre périphérique externe du plateau stationnaire 9 du moyen de clapet de l'élément femelle 1, de façon à permettre, lors de l'accouplement, le passage du plateau stationnaire 9 à l'intérieur du chenal de fluide de l'élément mâle 2 tout en ménageant un très faible jeu périphérique 31 entre le plateau stationnaire 9, l'alésage 30 et les joints 16 et 21. Comme évoqué plus avant, cette petite zone de jeu constitue la seule zone d'air emprisonné non contrôlée susceptible de passer dans le fluide traversant le coupleur en position d'accouplement.

Comme on le voit sur la figure 1, en début de phase d'accouplement, le plateau stationnaire 9 vient porter contre le joint 21, repoussant donc le capuchon 18 vers l'arrière à l'encontre du ressort 25, le piston 10 demeurant plaqué contre la face arrière du plateau 9 par le ressort 15. Un complément d'enfoncement de l'élément mâle dans l'élément femelle, comme figuré par la flèche 33, amène la zone annulaire 34 entre le joint 28 et l'alésage 31 de la partie d'extrémité avant 27 du corps mâle 5 à porter contre la partie externe de la face avant du joint annulaire 16 du piston 10, en repoussant donc ce dernier à l'encontre du ressort 15 et en le séparant du plateau stationnaire 9, l'insertion plus avant du corps mâle 5 dans le corps femelle 3 amenant corrélativement le joint 21 à se séparer de la partie tronconique interne 26 du corps mâle, ouvrant ainsi un passage de fluide au travers du coupleur comme représenté sur la demi-vue supérieure de la figure 1, le vissage s'effectuant jusqu'à ce que le joint 28 du corps mâle vienne porter contre l'extrémité avant 29 du corps femelle 3.

Le joint 21 peut être surmoulé sur la périphérie du plateau d'extrémité 17 du moyen de clapet coulissant mâle mais comme on le voit sur la figure 1, le joint 21 sera de préférence bridé entre le plateau 17 et une pièce rapportée arrière 35, sertie ou vissée sur la tige 19, le joint 21 comprenant à cet effet une semelle s'étendant radialement vers l'intérieur 36.

Quoique la présente invention ait été décrite avec des modes de réalisation particuliers, elle ne s'en trouve pas limitée mais est au contraire susceptible de variantes et de modifications qui apparaîtront à l'homme de l'art.

**Revendications**

1. Coupleur auto-obturateur, comprenant un élément mâle (2) insérable dans un élément femelle (1), des moyens de verrouillage à bague (7, 8) des éléments en position accouplée, chaque élément comprenant un moyen de clapet avec un élément déplaçable entre une position de fermeture de veine de fluide, en butée sous l'action d'un ressort contre un organe stationnaire dudit moyen de clapet, et une position d'ouverture de veine, à l'encontre de la sollicitation du ressort, les moyens de clapet des deux éléments coopérant mutuellement pour s'ouvrir lors de l'accouplement des éléments, le moyen de clapet de l'un des deux éléments mâle et femelle comprenant un organe stationnaire central (11) terminé par un plateau frontal (9), le moyen de clapet de l'autre élément comprenant un clapet coulissant (19) disposé centralement et pourvu d'un capuchon d'extrémité coopérant périphériquement avec une partie tronconique (26) interne du corps dudit élément, caractérisé en ce que ledit capuchon (18) comprend un joint torique (21), joint qui comporte une surface conique (23) et une surface frontale annulaire (22) destinée à s'appuyer contre la face avant d'un plateau frontal (9) dudit organe stationnaire (11), et en ce que la surface annulaire (22) du joint torique (21) soit en saillie devant la surface plate d'un plateau (17) du clapet coulissant (19).

2. Coupleur selon la revendication 1, caractérisé en ce que le joint (21) est monté sur le plateau d'extrémité (17) par bridage entre le plateau (17) et un élément rapport (35) fixé sur le moyen de clapet mâle.

3. Coupleur selon la revendication 2, caractérisé en ce que le piston annulaire (10) de l'élément femelle (1) comprend, rapporté sur sa face d'extrémité extérieure, un joint (16) présentant une surface annulaire d'appui dont une partie est susceptible de coopérer en contact étanche avec la face arrière du plateau frontal stationnaire (9) et dont une autre partie est susceptible de coopérer en contact étanche avec une partie de bord avant annulaire (34) du corps (5) de l'élément mâle (2).

4. Coupleur selon la revendication 3, caractérisé en ce que le diamètre externe du plateau frontal stationnaire (9) est très légèrement inférieur au diamètre interne de la zone (30) du corps (5) de l'élément mâle (2) formant ledit bord avant (34).

5. Coupleur selon la revendication 3 ou la revendication 4, caractérisé en ce que l'extrémité avant (27) du corps (5) de l'élément mâle (2) comporte un joint (28) susceptible de coopérer, en position d'insertion complète du coupleur, avec le bord avant (29) du corps (3) de l'élément femelle (1).

6. Coupleur selon l'une des revendications précédentes, caractérisé en ce que le capuchon (18) du moyen de clapet de l'élément mâle (2) est solidaire d'une tige centrale (19) coulissant axialement dans l'élément mâle (2).

7. Coupleur selon l'une des revendications précédentes, caractérisé en ce que le plateau frontal stationnaire (9) est solidaire d'une tige (11) fixée centralement dans l'élément femelle (1).

## Claims

1. Automatically closing coupling comprising a male element (2) which may be inserted into a female element (1), ring type latch means (7, 8) for said elements in coupled position, each element comprising a valve means having means which may be moved between a position wherein it closes a fluid path and where it abuts under the action of a spring onto a stationary member of said valve, and a path-opening position against the pressure of the spring, wherein the valve means of the two elements cooperate mutually in order to open themselves during the coupling of the elements, the valve means of one of the two, male and female, elements comprising a central stationary member (11) ending in a front plate (9), and the valve means of the other element comprising a sliding valve (19) which is centrally disposed and which comprises an end hat which cooperates circumferentially with an internal frustroconical portion (26) of the body of said element, characterized in that said hat (18) comprises a torical joint (21) which comprises a conical surface (23) and an annular front surface (22) provided to be pressed against a front plate (9) of said stationary member (11), and in that the annular surface (22) of the torical joint (21) projects out of a plane surface (17) of the sliding valve (19).

2. Coupling according to claim 1, characterized in that the joint (21) is mounted on the end plate (17) by clamping between plate (17) and a supporting element (35) which is fixed on the male valve means.

3. Coupling according to claim 2, characterized in that the annular piston (10) of the female element (1) comprises a joint (16) which is received within the outer end surface thereof and which exposes an annular pressure surface, a portion of which is capable to cooperate in tight contact with the rear surface of the stationary front plate (9), another portion of which is capable to cooperate in tight contact with an annular front edge (34) of the body (5) of the male element (2).

4. Coupling according to claim 3, characterized in that the external diameter of the stationary front plate (9) is very slightly smaller than the internal diameter of zone (30) of the body (5) of the male element (2) which forms said front edge (34).

5. Coupling according to claim 3 or 4, characterized in that the front end (27) of the body (5) of the male element (2) comprises a joint (28) capable of cooperating in a completely inserted position of the coupling with the front edge (29) of the body (3) of the female element (1).

6. Coupling according to one of the preceding claims, characterized in that the hat (18) of the valve means of the male element (2) is integral with a central rod which slides axially within the male element (2).

7. Coupling according to one of the preceding claims, characterized in that the stationary front plate (9) is integral with a rod (11) wich is centrally fixed within the female element (1).

## Patentansprüche

1. Selbstschliessende Kupplung mit einem männlichen Element (2) welches in ein weibliches Element (1) eingeführt werden kann, mit einer Ringverriegelung (7, 8) für die Elemente in verkuppelter Position, wobei jedes des Elemente Ventilmittel mit einem zwischen einer einen Durchflusskanal schliessenden Position, in der es sich unter der Wirkung einer Feder gegenein stationäres Organ dieser Ventilmittel abstützt, und einer den Durchflusskanal gegen· die Federkraft öffnenden Position verschiebbaren Teil aufweist, wobei die Ventilmittel miteinander kooperieren um sich beim Ankuppeln der Elemente zu öffnen, wobei die Ventilmittel eines des männlichen oder weiblichen Elements ein zentrales stationäres Organ (11) aufweisen, welches in einer Frontplatte (9) endet, wobei die Ventilmittel des anderer Elements ein gleitbares Ventil (19) aufweisen, welches zentral angeordnet und mit einem Endhütchen ausgestattet ist, welches umfangsmässig mit einem internen kegelstumpfförmigen Teil (26) des Körpers jenes Elements zusammenarbeitet, dadurch gekennzeichnet, dass dieses Endhütchen (18) eine Ringdichtung (21), mit einer konischen Fläche (23) und einer ringförmigen Frontfläche (22) aufweist, welche dazu bestimmt ist sich gegen die Frontfläche der Frontplatte (9) des besagten stationären Organs (11) abzustützen, und dadurch, dass die ringförmige Fläche (22) der Ringdichtung (21) aus der planen Fläche der Platte (17) des gleitbaren Ventils (19) heraussteht.

2. Kupplung nach Anspruch 1, dadurch gekennzeichnet, dass die Dichtung (21) durch Einklemmen zwischen der Platte (17) und einem auf dem männlichen Ventilelement befestigten Stützelement (35) montiert ist.

3. Kupplung nach Anspruch 2, dadurch gekennzeichnet, dass der ringförmige Kolben (10) des weiblichen Elements (1) eine in seiner Frontfläche angeordnete Dichtung (16) aufweist welche eine ringförmige Andruckfläche präsentiert von der ein Teil in dichtem Kontakt mit der Hinterfläche der stationären Frontplatte (9) und von der ein anderer Teil in dichtem Kontakt mit einem Teil des ringförmigen Vorderrands (34) des Körpers (5) des männlichen Elements (2) zusammenarbeiten kann.

4. Kupplung nach Anspruch 3, dadurch gekennzeichnet, dass der äussere Durchmesser der stationären Frontplatte (9) ganz geringfügig kleiner ist als der innere Durchmesser der Zone (30) des Körpers (5) des männlichen Elements (2) welches jenen Vorderrand (34) bildet.

5. Kupplung nach Anspruch 3 oder 4, dadurch gekennzeichnet, dass das Vorderende (27) des Körpers (5) des männlichen Elements (2) eine Dichtung (28) aufweist, welche in völlig gekoppelter Position der Kupplung mit dem Vorderrand (29) des Körpers (3) des weiblichen Elements (1) zusammenarbeiten kann.

6. Kupplung nach einem der vorhergehenden Ansprüche, dadurch gehennzeichnet, dass das Hütchen (18) der Ventilmittel des männlichen Elements (2) fest mit einer zentralen, im männlichen Element (2) axial. gleitbaren Stange (19) verbunden ist.

7. Kupplung nach einem der vorhergehenden Ansprüche, dadurch gekennzeichnet, dass die stationäre Frontplatte (9) fest mit einer im weiblichen Element (1) fixierten Stange verbunden ist.

FIG: 2

FIG: 1

EP 0 085 010 B1